(19) Europäisches Patentamt / European Patent Office / Office européen des brevets

(11) **EP 3 845 824 B1**

(12) **EUROPEAN PATENT SPECIFICATION**

(45) Date of publication and mention
of the grant of the patent:
**20.09.2023 Bulletin 2023/38**

(21) Application number: **20175811.7**

(22) Date of filing: **20.05.2020**

(51) International Patent Classification (IPC):
*F24H 1/20* *(2022.01)*   *F24H 4/04* *(2006.01)*
*F24H 9/20* *(2022.01)*   *H05B 1/02* *(2006.01)*
*F24D 17/00* *(2022.01)*   *F24D 17/02* *(2006.01)*
*F24D 19/10* *(2006.01)*   *F25B 30/02* *(2006.01)*

(52) Cooperative Patent Classification (CPC):
**H05B 1/0283; F24D 17/0031; F24D 17/02;**
**F24D 19/1054; F24H 1/202; F24H 4/04;**
**F24H 9/2021; F25B 30/02;** F24D 2200/08;
F24D 2200/123; F25B 2339/047; F25B 2600/021;
F25B 2600/2513; Y02B 30/70

(54) **WATER HEATER CONTROLLED BY FREQUENCY REGULATION OF INVERTER AND METHOD FOR CONTROLLING A WATER HEATER**

DURCH FREQUENZREGELUNG EINES WECHSELRICHTERS GESTEUERTER WASSERERHITZER UND VERFAHREN ZUR STEUERUNG EINES WASSERERHITZERS

CHAUFFE-EAU COMMANDÉ PAR RÉGULATION DE FRÉQUENCE D'ONDULEUR ET PROCÉDÉ DE COMMANDE D'UN CHAUFFE-EAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.12.2019 KR 20190178087**

(43) Date of publication of application:
**07.07.2021 Bulletin 2021/27**

(73) Proprietor: **LG Electronics Inc.**
**Seoul 07336 (KR)**

(72) Inventors:
• **LEE, Jonghyug**
  **Seoul 08592 (KR)**
• **KIM, Kyungtae**
  **Seoul 08592 (KR)**

(74) Representative: **Ter Meer Steinmeister & Partner
Patentanwälte mbB
Nymphenburger Straße 4
80335 München (DE)**

(56) References cited:
**WO-A1-2014/002133    WO-A2-2019/215639
JP-A- 2004 144 446**

## Description

This application claims the priority of KR Patent Application No. 10-2019-0178087, filed December 30, 2019, in the KIPO.

## BACKGROUND

### 1. Field

The present disclosure relates to a water heater and, more particularly, to a water heater that adjusts a frequency of an inverter based on relevant information to operate efficiently and to a method for controlling a water heater.

### 2. Background

WO 2014/002133 A1 describes a heat-pump type hot water supply system which is capable of switching between heat sources so as to minimize operating cost for a heat-pump type hot water supply/heating system provided with a heat pump device and a combustion heat source as heat sources. WO 2019/215639 A2 describes systems and methods for a thermosyphonic water heating system for a storage tank. A DC heat pump receives power from a DC power source and heats water via a heat exchanger using a thermosyphonic piping system. A passive back-flushing having a cold water inlet pipe connected to the hot water return pipe draws cold water into the storage tank through the heat exchanger. A water heater is an electronic appliance for heating liquid such as water and uses a scheme of transmitting resistance heat of a heater to a storage tank containing content such as water or other liquid to be heated by attaching the heater to an outer wall of the storage tank, or a scheme of heating water or other liquid by providing a heater in a storage tank to be in direct contact with the water or other liquid. The aforementioned schemes have a problem in that it may be dangerous unless an adequate safety device is equipped therewith because a maximum temperature is about 800 degrees Celsius (°C).

Thus, it is an object of the present invention to provide a water heater having a reduced risk and which requires less structural effort and method for safely controlling a water heater.

The object is solved by the features of the independent claims. Preferred embodiments are given in the dependent claims.

In one aspect of the invention, a water heater is defined in claim 1. This water heater comprises: a storage tank configured to store water; at least one sensor configured to sense a temperature of the water and/or to sense a temperature outside of the water heater; a first heater assembly comprising a heating element configured to heat the water; a second heater assembly comprising a heat pump system configured to heat the water; an inverter connected to the heat pump system; a first controller configured to control the first heater assembly and a second controller configured to control the heat pump system by adjusting an output frequency of the inverter.

Preferably, the water heater may be configured to be set and/or to operate based on at least one of a heat pump mode, a heater mode, an auto mode, a turbo mode, and a vacation mode.

Preferably, the second controller may be configured to adjust the output frequency of the inverter based on the at least one of the heat pump mode, the heater mode, the auto mode, the turbo mode, and the vacation mode.

Preferably, the heat pump mode may correspond to a mode for heating the water in the storage tank by using the second heater assembly.

Preferably, the heater mode may correspond to a mode for heating the water in the storage tank by using the first heater assembly.

Preferably, the auto mode may correspond to a mode for heating the water in the storage tank by using at least one of the first heater assembly and the second heater assembly.

Preferably, the turbo mode may correspond to a mode for heating the water in the storage tank by using both the first heater assembly and the second heater assembly.

Preferably, the vacation mode may correspond to a mode for maintaining a temperature of the water in the storage tank at a predetermined temperature.

According to the invention, the second controller is configured to determine a target pressure of the heat pump system based on the sensed temperature outside of the water heater, the sensed temperature of the water in the storage tank, and the set temperature., and

According to the invention, the second controller is configured to change the output frequency of the inverter based on a difference between the determined target pressure and a pressure measured at the heat pump system.

Preferably, the second controller may be configured to adjust the output frequency of the inverter based on an allowable output frequency set based on the at least one of the heat pump mode, the heater mode, the auto mode, the turbo mode, and the vacation mode.

Preferably, the second controller may be configured to identify information associated with an operation of the first heater assembly based on information received from the first controller.

Preferably, the second controller may be configured to change the output frequency of the inverter based on the information associated with the operation of the first heater assembly.

Preferably, the second controller may be configured to when a current supplied to the water heater during an operation of the first heater assembly is equal to or greater than a predetermined value, adjust the output frequency of the inverter to be reduced.

Preferably, the second controller may be configured to adjust the output frequency of the inverter based on a first current value supplied to the first heater assembly and a second current value input to the inverter.

According to another aspect of the invention, a method for controlling the water heater of claim 1 is defined in claim 9.

Preferably, controlling of the heat pump system may include controlling the heat pump system by adjusting the output frequency of the inverter based on an allowable output frequency set to correspond to the determined mode of the water heater.

Preferably, controlling of the heat pump system may include: determining whether a heater included in the water heater operates; reducing the output frequency of the inverter when a current equal to or higher than a predetermined current is sensed in the water heater during operation of the heater

## BRIEF DESCRIPTION OF THE DRAWINGS

Arrangements and embodiments may be described in detail with reference to the following drawings in which like reference numerals refer to like elements and wherein:

FIG. 1 is an external perspective view of a water heater according to an example embodiment of the present disclosure;

FIG. 2 is a diagram illustrating an inside of a water heater according to an example embodiment of the present disclosure;

FIG. 3 is a block diagram showing devices included in a water heater of an example embodiment;

FIG. 4 is a diagram illustrating operable modes of a water heater acc. to an example embodiment;

FIG. 5 is a flowchart of a process of setting a target frequency of an inverter according to the invention;

FIG. 6 is a diagram illustrating a process of identifying an acceptable inverter frequency for each mode according to an example embodiment;

FIG. 7 is a diagram illustrating an example of verifying whether to adjust a limit level for an input current of an inverter according to an example embodiment; and

FIG.8 is a flowchart of a control method of a water heater acc. to an example embodiment.

## DETAILED DESCRIPTION

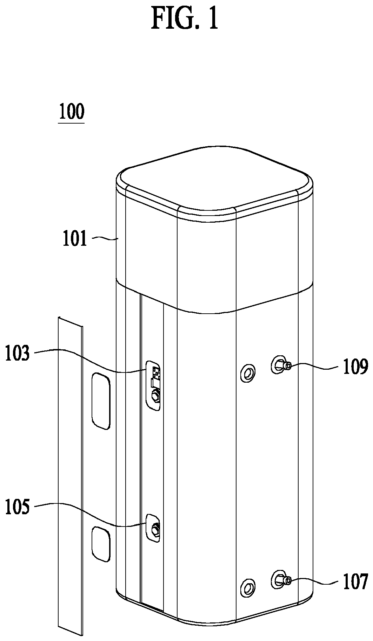

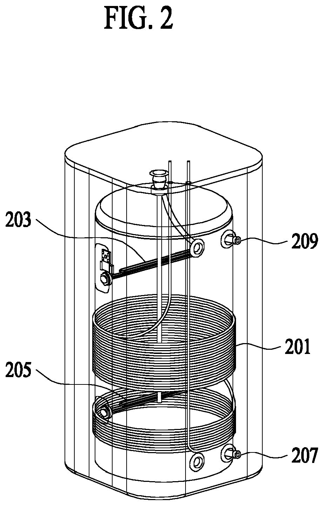

FIG. 1 illustrates an exterior of a water heater 100. FIG. 2 illustrates an interior of the water heater 100. The water heater 100 may provide a user with water by heating the water stored in a storage tank or by maintaining a temperature of the water stored in the storage tank. The water heater 100 may use at least one of a first heater assembly and a second heater assembly to heat the water stored in the storage tank or to maintain a temperature of the water. The water heater 100 may heat the water supplied to the storage tank through an inlet pipe 107 (or inlet pipe 207) using at least one of the first heater assembly and the second heater assembly, and may discharge the water heated up to a set temperature through an outlet pipe 109 and (or outlet pipe 209).

The first heater assembly is a device including a heating element that generates heat according to application of power to heat water. For example, the first heater assembly may include at least one heater, and the heater may include an electric resistance heater. The first heater assembly may include two heaters 103 and 105 as shown in FIG. 1, but this is merely an example and the scope of the present disclosure is not limited to the two heaters 103 and 105. The heating element may be made of a material having conductivity and rigidity (for example, stainless steel). A substance capable of generating heat according to an electrical connection may be included in the heating element. An example of the heating element may include a nichrome wire in a coil shape. An example of such heaters 103 and 105 may include a sheath heater.

The first heater assembly (including at least one of the heaters 103 and 105) may heat the water while contacting the water stored in the storage tank. Thus, a water heating rate of the first heater assembly may be relatively higher than that of the second heater assembly. The second heater assembly including the heat pump system 101 may consume relatively less power than the first heater assembly including at least one of the heaters 103 and 105. Thus, the second heater assembly may be efficient as compared to the first heater assembly. That is, the first heater assembly may increase the temperature of the water quickly but require relatively more power consumption, and the second heater assembly may increase the temperature of the water relatively slowly but require relatively less power consumption.

The heaters 105 and 205, which is the heating element included in the first heater assembly, may heat water located in a lower portion of the storage tank. The heaters 103 and 203, which is the heating element included in the first heater assembly, may heat water located in a relatively upper portion of the storage tank. The positional relationship between the heaters 103 and 203 and the heaters 105 and 205 is merely an example, and the scope of the present disclosure is not limited to the positional relationship as shown in FIG. 1.

The heat pump system 101 may include at least one of a compressor, a condenser, an expansion valve, and an evaporator. The compressor of the heat pump system 101 using a refrigerant compression cycle may compress a refrigerant at a high temperature and a high pressure. The condenser may heat the water through heat exchange between a refrigerant of a high temperature passing through the compressor and water of a low temperature. As shown in FIG. 2, a refrigerant pipe 201 connected to the condenser may be formed to surround the storage tank. The refrigerant of the high temperature passing through the compressor may perform heat exchange with the water of the low temperature in the storage tank while flowing through the refrigerant pipe 201. The connection relationship between the refrigerant pipe 201 and the storage tank as shown in FIG. 2 is merely an example, and the scope of the present invention is not limited to the connection relationship as shown in FIG. 2. The refrigerant passing through the condenser may be introduced into the expansion valve. An example of the expansion valve is an Electronic Expansion Valve (EEV), in which an opening degree is adjustable within a predetermined range. Thus, pressure of the refrigerant introduced into the expansion valve may be reduced. The refrigerant introduced into the evaporator through the expansion valve may be vaporized through heat exchange with outside air. As such, the heat pump system 101, which performs heat exchange with water using a refrigerant compression cycle through the compressor, the condenser, the expansion valve, and the evaporator, may have a relatively slow heating rate of water than the heaters 103 and 105.

The water in the storage tank may be heated using at least one of the first heater assembly including at least one heater and the second heater assembly including the heat pump system. In this example, whether to operate the first heater assembly and the second heater assembly may be determined according to an operation mode of the water heater. An operation of a heater assembly according to each mode may be described in detail below.

The heat pump system 101 is connected to an inverter or a frequency modulator (hereafter collectively referred to as an inverter). Operation of the heat pump system 101 is controlled based on an output frequency of the inverter. The inverter may convert DC power into AC power, provide the AC power to the compressor, and adjust the output frequency of the inverter in response to a required operating state of the compressor. This may improve the energy efficiency of the water heater

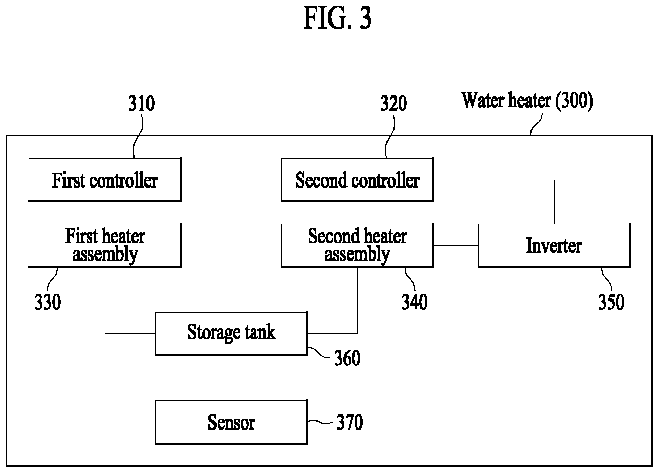

FIG. 3 shows a water heater 300 that includes at least one of a first controller 310, a second controller 320, a first heater assembly 330, a second heater assembly 340, an inverter 350, a storage tank 360, and a sensor 370.

The first controller 310 controls operation of the first heater assembly 330. The second controller 320 controls operation of the second heater assembly 340 and the inverter 350. The first controller 310 and/or the second controller 320 may transmit and receive relevant information using wired and/or wireless communication. In an example embodiment, the first controller 310 and the second controller 320 are described as separate elements, although embodiments are not limited thereto. The first controller 310 and the second controller 320 may be implemented by at least one processor, which is a hardware component device. There might be also one controller realized by one or more processors to control the first and second heater assembly.

The first controller 310 may control operation of a heater included in the first heater assembly 330. For example, when a turbo mode is set, the first controller 310 may control at least one heater included in the first heater assembly 330 to be in an on state. Alternatively, when a heat pump mode is set, the first controller 310 may control all heaters included in the first heater assembly 330 to be in an off state.

The second controller 320 may control operation of the heat pump system included in the second heater assembly 340 and the inverter 350. For example, when a heater mode is set, the second controller 320 may control the heat pump system included in the second heater assembly 340 to be in the off state. Alternatively, when a turbo mode is set, the second controller 320 may control the heat pump system included in the second heater assembly 340 to be in the on state.

The water heater 300 may operate based on at least one of a heat pump mode, a heater mode, an auto mode, a turbo mode, and a rest mode (or a vacation mode). In this example, the second controller 320 may adjust a frequency of the inverter in response to each mode. More specifically, the second controller 320 may identify a temperature related to an outside of the water heater, and a temperature of water in the storage tank 360 sensed by the temperature sensor 370. The second controller 320 may adjust the frequency of the inverter 350 based on the temperature related to the outside of the water heater (external temperature), the temperature of the water in the storage tank 360, and a set temperature.

According to the invention, the second controller 320 determines a target pressure related to the compressor or the condenser based on the temperature related to the outside of the water heater, the temperature of the water, and the set temperature. For example, when the temperature related to the outside of the water heater is 10 degrees Celsius (°C), the temperature of water is 20°C, and the set temperature is 40°C, the second controller 320 may determine a target pressure P1 for heating the water to the set temperature. As another example, when the temperature related to the outside of the water heater is 10°C, the temperature of the water is 40°C, and the set temperature is 40°C, the second controller 320 may determine a target pressure P2 for heating the water to the set temperature. At this time, a change in temperature through the heat pump system is smaller when the target pressure P2 is set, as compared to the example where the target pressure P1 is set. Thus, the target pressure P2 may be relatively smaller than the target pressure P1.

The second controller 320 monitors a pressure measured in the heat pump system, and identifies a difference between a target pressure and a measured pressure. According to the invention, the second controller 320 identifies an inverter frequency change amount based on the pressure difference, and determines a target frequency of the inverter by reflecting the frequency change amount.

The second controller 320 operates the inverter 350 based on a target frequency of the inverter, and the heat pump system connected to the inverter 350 operates based on the adjusted frequency of the inverter. This may be repeatedly performed until the temperature of the water stored in the storage tank 360 reaches the set temperature.

In this example, an allowable frequency for each mode may be set in advance, and the second controller 320 may adjust the target frequency by comparing the target frequency with the allowable frequency for each mode. More specifically, when the target frequency is relatively higher than the allowable frequency for each mode, the second controller 320 may control the target frequency to be reduced to or below the allowable frequency. When the target frequency is relative lower than the allowable frequency for each mode, the second controller 320 may not adjust the determined target frequency. For example, when an allowable frequency for the auto mode is set in advance and the target frequency is relatively greater than the allowable frequency for the auto mode, the second controller 320 may control the target frequency to be reduced to or below the allowable frequency for the auto mode. At this time, if water is heated using the heat pump system, it may take a relatively longer time to heat the water. The allowable frequency for each mode may be described in detail below.

The second controller 320 may receive information on whether the first heater assembly 330 operates from the first controller 310. Since the first heater assembly 330 consumes relatively more current than the second heater assembly 340, the second controller 320 may control the second heater assembly 340 based on an operation of the first heater assembly 330. This may ensure safety of the water heater. More specifically, when a current supplied to the water heater is equal to or greater than a predetermined current value, the safety of the water heater may not be ensured due to an overcurrent. The predetermined current value may be a value that is set based on safety. Most of the current supplied to the water heater 300 may be consumed by the first heater assembly 330. That is, when the current supplied to each of the first heater assembly 330 and the second heater assembly 340 is not equal to or greater than the predetermined current value and the first heater assembly 330 and the second heater assembly 340 operate simultaneously, the current supplied to the water heater may be equal to or greater than the predetermined current value. Thus, when the first heater assembly 330 is in the on state, the second controller 320 may reduce a limit level for an input current of the inverter 350, thereby preventing the overcurrent and ensuring the safety. In an embodiment, the second controller 320 may limit the current supplied to the second heater assembly 340 and the inverter 350 based on power consumed by driving the first heater assembly 330. Alternatively, when the first heater assembly 330 is in the off state, the second controller 320 may not adjust the limit level for the input current of the inverter 350. A detailed description thereof may be provided below. Therefore, the water heater may adjust the frequency of the inverter to efficiently and stably heat the water to the set temperature.

The storage tank 360 may be located adjacent to the first heater assembly 330 and the second heater assembly 340 as described above. The water in the storage tank 360 may be heated or maintained at a predetermined temperature using at least one of the first heater assembly 330 and the second heater assembly 340.

The water heater 300 includes at least one temperature sensor 370 and senses a temperature using the temperature sensor 370. The water heater 300 may sense the temperature of the water in the storage tank 360 using the temperature sensor 370, or may sense a temperature related to an outside of the water heater using the one or more temperature sensors 370 (or other sensor). In an embodiment, the temperature sensor may further sense a temperature of the water at a portion where the water is discharged. At this time, the temperature related to the outside of the water heater may include an ambient temperature of the water heater. In this example, when the water heater 300 includes one or more temperature sensors to sense the temperature of the water in the storage tank, the temperature sensors may sense different temperatures based on positions of the sensors. Thus, the water heater 300 may identify the temperature of the water in the storage tank 360 based on the position of each sensor, an amount of water according to the position of each sensor, and/or a temperature sensed by each sensor.

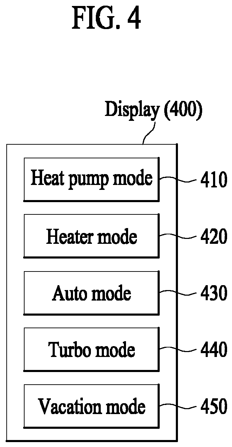

FIG. 4 shows a display 400 of a water heater. The water heater may operate based on at least one of a heat pump mode 410, a heater mode 420, an auto mode 430, a turbo mode 440, and a vacation mode 450. The water heater may include more or less modes.

When a temperature related to an outside of the water heater is less than a predetermined temperature, the water heater may operate using a heater, irrespective of a mode, to ensure reliability of operation of the water heater. In this example, the predetermined temperature may be a temperature that is set in advance through experiments. For example, in the example where the predetermined temperature is set to 10°C, if the temperature related to the outside of the water heater is reduced to or below 10°C, the water heater may operate using a heater, irrespective of a mode.

The water heater may operate based on each mode selected by the user through the display 400. The selectable mode may include the heat pump mode 410, the heater mode 420, the auto mode 430, the turbo mode 440, and the vacation mode 450, for example.

The heat pump mode 410 may correspond to a mode for heating water in a storage tank to a set temperature using only a second heater assembly including a heat pump system. Even in the heat pump mode 410, when the temperature related to the outside of the water heater is less than a predetermined temperature, the heater may operate to prevent a breakdown. When the temperature related to the outside of the water heater is higher than the predetermined temperature, only the second heater assembly may be used in the heat pump mode 410 to heat the water to the set temperature. The heat pump mode 410 is a mode in which water is heated using only the heat pump system rather than the heater, and may be a mode in which water is heated relatively slowly but a very small amount of power is consumed.

The heater mode 420 may correspond to a mode for heating the water in the storage tank to a predetermined temperature using only a first heater assembly including a heater. The heater mode 420 is a mode for heating water using only the heater rather than the heat pump system and may be a mode in which water is heated up to a set temperature relatively quickly but a large amount of power is consumed. Accordingly, the heater mode 420 may be used as a mode for heating water in an environment in which the heat pump system or the inverter is inoperable or operation efficiency is low. In an embodiment, a user may set only a target temperature without directly determining each mode, and the water heater or any one of the controllers may determine an operation mode based on an ambient temperature, a target temperature, and a current temperature of water therein.

The auto mode 430 may correspond to a mode in which at least one of the first heater assembly and the second heater assembly operates based on a difference between a temperature of the water in the storage tank and a set temperature. More specifically, when the difference between the temperature of the water in the storage tank and the set temperature is equal to or greater than a predetermined value in the auto mode 430, water may be heated using both the first heater assembly and the second heater assembly. Alternatively, when the difference between the temperature of the water in the storage tank and the set temperature is less than the predetermined value in the auto mode 430, water may be heated using only the second heater assembly. In the auto mode 430, the second controller may adjust a frequency of the inverter in consideration of energy required to heat the water to the set temperature, thereby operating the water heater efficiently. For example, when the predetermined value is preset to 10°C and the difference between the temperature of the water in the storage tank and the set temperature is 8°C, the water heater set to the auto mode 430 may heat the water using only the second heater assembly. In another example, when the predetermined value is preset to 10°C or when the difference between the temperature of the water in the storage tank and the set temperature is 15°C, the water heater set to the auto mode 430 may operate both the first heater assembly and the second heater assembly until the difference is reduced to 10°C. At this time, instead of setting the frequency of the inverter to the maximum to heat the water, the second controller may adjust the frequency of the inverter in consideration of efficiency of energy required to heat the water in the storage tank to the set temperature.

The turbo mode 440 may correspond to a mode for heating the water within a shortest time to the set temperature by operating both the first heater assembly and the second heater assembly to a maximum extent. More specifically, the turbo mode 440 may correspond to a mode in which the first heater assembly and the second heater assembly operate to heat the water to the set temperature within the shortest time rather than considering energy efficiency.

The vacation mode 450 may correspond to a mode for maintaining the temperature of the water in the storage tank at a specific temperature when the water heater is not used, and may prevent the water heater from operating abnormally or freezing and bursting at a low temperature. More specifically, the vacation mode 450 may be a mode for maintaining the temperature of the water in the storage tank at a predetermined temperature when the water heater is not used, or may be a mode in which the temperature of the water in the storage tank is maintained at the predetermined temperature or higher when a user selects the vacation mode 450. In this example, when the temperature related to the outside of the water heater is lower than the predetermined temperature, the temperature of the water may be maintained using the heater. When the temperature related to the outside of the water heater is equal to or higher than the predetermined temperature, the temperature of the water may be maintained using the heat pump system. For example, when an outside temperature is equal to or higher than the predetermined temperature and the user selects the vacation mode 450, the water heater may operate the heat pump system so that the water temperature of the storage tank is maintained at the predetermined temperature, for example, 15°C.

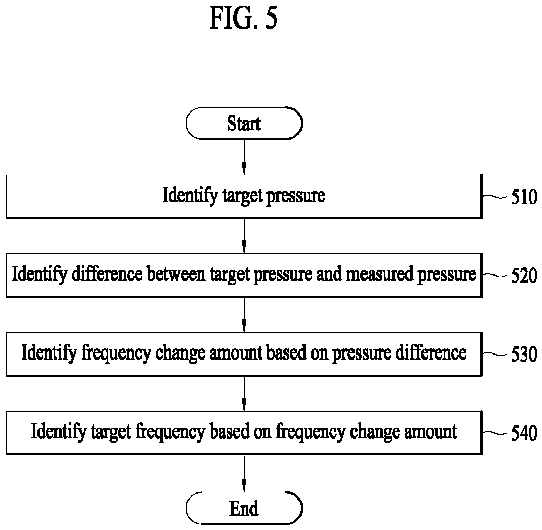

FIG. 5 shows a process of setting a target frequency of an inverter to heat water to a set temperature by the second controller. The second controller controls operation of the heat pump system using the frequency of the inverter. The second controller determines a target frequency of the inverter necessary to supply energy required to heat water to a predetermined temperature based on various relevant information

In operation 510, the second controller identifies the target pressure based on a temperature related to outside of the water heater, a temperature of the water in the storage tank, and a set temperature. According to the invention, the second controller determines a target pressure of the heat pump system for supplying energy required to heat the water to the set temperature based on the temperature related to outside of the water heater, the temperature of the water in the storage tank, and the set temperature. For example, when the temperature related to outside of the water heater is 10°C, the temperature of the water in the storage tank is 20°C, and the set temperature is 40°C, the second controller 320 may determine a target pressure Pb for supplying energy required to heat the water to the set temperature.

In operation 520, the second controller identifies a difference between the target pressure and a monitored pressure while monitoring a pressure measured in the heat pump system. For example, when Pa is a pressure measured in the heat pump system and Pb is a target pressure of the heat pump system for supplying energy required to heat the water to the set temperature, the second controller identifies a pressure difference between Pb and Pa.

In operation 530, the second controller identifies a frequency change amount ΔHz based on the pressure difference. More specifically, the second controller may identify a frequency change amount ΔHz based on Equation 1 set forth below. Kp and Kf may correspond to constants corresponding to gains that are set in advance through experiments.

[Equation 1]

$$\Delta Hz = Kp * (1/Kf * \text{Pressure Difference})$$

In operation 540, the second controller may identify the target frequency based on the frequency change amount. More specifically, the second controller may identify the target frequency of the inverter based on the current frequency and the frequency change amount of the inverter as shown below in Equation 2.

[Equation 2]

$$\text{Target Frequency} = \text{Current Frequency} + \Delta Hz$$

The second controller operates the inverter based on the target frequency and heats the water in the storage tank to the set temperature.

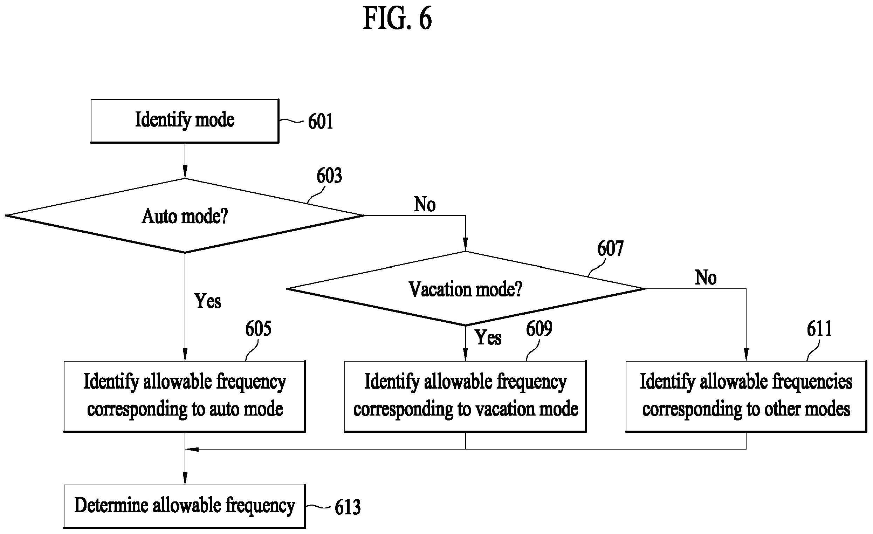

FIG. 6 may show a process of determining an allowable frequency for each mode. The allowable frequency may be different for each of the modes described above. More specifically, allowable frequencies respectively set to correspond to the auto mode, the vacation mode, and other modes may be all different. It may be necessary to limit the allowable frequency for the auto mode because the auto mode corresponds to a mode in which energy efficiency is considered. It may be necessary to limit the allowable frequency for the vacation mode because the vacation mode corresponds to a mode in which a predetermined temperature is maintained to prevent freezing. However, it may not be necessary to limit the allowable frequency for the turbo mode because the turbo mode corresponds to a mode in which both the first heater assembly and the second heater assembly are used to the maximum extent to heat water within a short time, instead of considering energy efficiency. However, even when the turbo mode is operated, it may be possible to control a current supplied to the water heater not to exceed the maximum allowable current value. Additionally, the heater mode is a mode that is operated regardless of a frequency of the inverter, and thus it is not necessary to limit the allowable frequency for the heater mode. In the heater pump mode, since only the heat pump system is operated alone without the heater, a less amount of power consumption is required and there is no risk of overcurrent. Thus, it is not necessary to limit the allowable frequency for the heat pump mode.

In this example, the allowable frequency may include a frequency allowed for the inverter in each mode. When the target frequency determined through FIG. 5 to heat the water to the set temperature is equal to or higher than the allowable frequency, the target frequency may be limited to the allowable frequency. When the target frequency is lower than the allowable frequency, the target frequency may be maintained.

More specifically, the auto mode may correspond to a mode for heating water to the set temperature in consideration of energy efficiency. Thus, in the auto mode, the allowable frequency in consideration of energy efficiency may be less than the allowable frequency for the turbo mode in which energy efficiency may not be considered. When the auto mode is set and the target frequency is equal to or greater than the allowable frequency, the target frequency may be limited to the allowable frequency, or when the target frequency is smaller than the allowable frequency, the target frequency may be maintained.

In addition, the vacation mode may correspond to a mode in which a temperature of the water is maintained at the set temperature to achieve energy efficiency and prevent breakdown (for example, freezing and bursting). Thus, the allowable frequency for the vacation mode may be lower than the allowable frequencies for other modes (e.g., the auto mode, the turbo mode, the heater mode, and the heat pump mode).

A detailed process of determining an allowable frequency compared to a target frequency is as follows. In operation 601, the second controller may identify a mode of the water heater. As described above, the mode of the water heater may include the auto mode, the vacation mode, the turbo mode, the heater mode, and the heat pump mode.

In operation 603, the second controller may identify whether the mode of the water heater is the auto mode. In operation 605, when the auto mode is identified, the second controller may identify an allowable frequency corresponding to the auto mode in consideration of the energy efficiency required to heat the water to the set temperature.

Alternatively, in operation 607, if the mode of the water heater is not the auto mode, the second controller may identify whether the mode of the water heater is the vacation mode. In operation 609, when the mode of the water heater is identified as the vacation mode, the second controller may identify an allowable frequency corresponding to the vacation mode in consideration of energy efficiency required to maintain the temperature of the water.

Alternatively, in operation 611, when the mode of the water heater is not the vacation mode, the second controller may identify an allowable frequency corresponding to each of the other modes. The other modes may include at least one of the turbo mode, the heater mode, and the heat pump mode. For example, since the turbo mode is designed to shorten a heating time rather than considering energy efficiency, it is not necessary to limit the allowable frequency for the turbo mode, and thus the allowable frequency for the turbo mode may correspond to the maximum frequency allowed for the inverter in the turbo mode. That is, when the mode of the water heater corresponds to the other modes as described above, the frequency allowed for the inverter need not be limited.

In operation 613, the second controller may determine an allowable frequency corresponding to the auto mode, the vacation mode, or the other modes. In this example, the determined allowable frequency may be compared to a target frequency. For example, in the auto mode, when the target frequency is equal to or greater than the allowable frequency, the second controller may need to limit the target frequency, or when the target frequency is smaller than the allowable frequency, the second controller may not need to limit the target frequency. In another example, in the vacation mode, when the target frequency is equal to or greater than the allowable frequency, the second controller may need to limit the target frequency, or when the target frequency is smaller than the allowable frequency, the second controller may not need to limit the target frequency. In another example, in the turbo mode, since the target frequency is equal to or smaller than the allowable frequency, the second controller may not need to limit the target frequency.

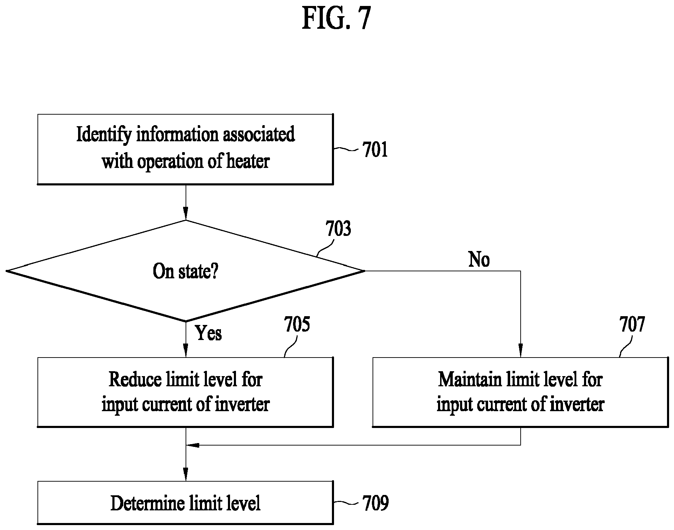

FIG. 7 is a diagram illustrating an example of verifying whether to adjust a limit level for an input current of an inverter according to an example embodiment. As described above, the heater may consume relatively more power than the heat pump system. If either the heater or the heat pump system is operated alone, an overcurrent may not flow in the water heater. However, when the heater and the heat pump system are operated simultaneously and if a current supplied to the water heater corresponds to a specific value or more, the water heater may be damaged due to the overcurrent. Therefore, a technology for preventing the damage due to the overcurrent may need to be applied to the water heater.

In operation 701, the second controller may identify information associated with operation of the heater through the first controller. The information associated with operation of the heater may include, for example, information indicating whether the heater is in an on state or in an off state. In operation 703, the second controller may identify whether the heater is in the on state or in the off state based on the information identified by the first controller.

In operation 705, the second controller may reduce the limit level for the input current of the inverter when the heater is in the on state. The limit level for the input current of the inverter may be a value corresponding to a maximum current to be input to the inverter. If a current equal to or greater than the limit level is sensed, the water heater may malfunction. In order to prevent this problem, the inverter may operate based on an input current that is smaller than the limit level.

Since the heater requires a large amount of power consumption, the water heater may be broken down when the heat pump system also operates while the heater is in the on state. In order to prevent the breakdown, the limit level for the input current of the inverter may be reduced. If the limit level is reduced, the inverter may operate based on input current smaller than the limit level, and thus the water heater may not be at risk of breakdown.

In operation 707, the second controller may maintain the limit level for the input current of the inverter when the heater is in the off state. Since there is no risk of overcurrent when the heater is in the off state, the limit level for the input current of the inverter may not be reduced, but may be maintained.

In operation 709, the second controller may determine the limit level for the input current. If a current equal to or greater than the limit level is sensed, the second controller may adjust the frequency of the inverter to be reduced. More specifically, when a predetermined value corresponding to the limit level is set, the second controller may sense whether or not a current supplied to the water heater is equal to or greater than the predetermined value. When the current supplied to the water heater is equal to or greater than the predetermined value, the second controller may adjust the frequency of the inverter to be reduced. The frequency of the inverter may be adjusted so that the current supplied to the water heater does not become equal to or greater than the predetermined value.

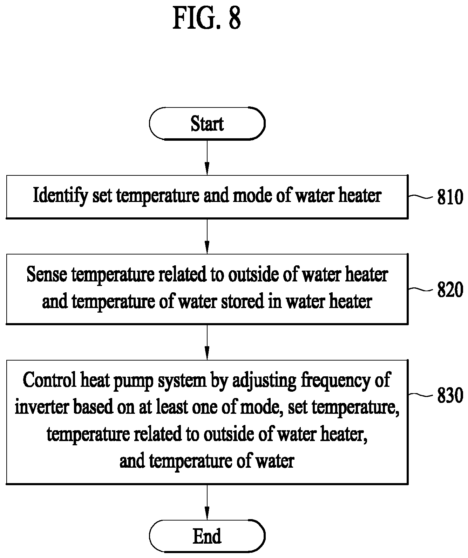

FIG. 8 is a flowchart illustrating a control method of a water heater. In operation 810, a mode and a set temperature of the water heater may be identified. The mode of the water heater may include at least one of an auto mode, a turbo mode, a heater mode, a heat pump mode, and a vacation mode. The set temperature may be a temperature set corresponding to each mode or may include a temperature set by a user.

In operation 820, a temperature related to an outside of the water heater and a temperature of water stored in the water heater may be sensed through a sensor (or more than one sensor).

In operation 830, a heat pump system may be controlled by adjusting a frequency of an inverter based on at least one of the mode, the set temperature, the temperature related to the outside of the water heater, and the temperature of the water.

A target frequency of the inverter for heating the water up to the set temperature may be determined based on various relevant information. Based on an allowable frequency set to correspond to each mode, the determined target frequency may be adjusted. For example, if the determined target frequency is greater than the allowable frequency in the auto mode, the target frequency may be limited to a frequency less than or equal to the allowable frequency.

While the inverter is operating at the target frequency less than or equal to the allowable frequency, if the heater operates at the same time and accordingly a current equal to or greater than a predetermined current is sensed in the water heater, the target frequency of the inverter may be adjusted to be reduced. More specifically, when a current supplied to the water heater during operation of the first heater assembly is equal to or greater than a predetermined value, the target frequency of the inverter may be adjusted to be reduced. The target frequency of the inverter may be adjusted so that the current is not greater than the predetermined value. The current supplied to the water heater may be determined based on a first current value supplied to the first heater assembly and a second current value input to the inverter. When the current supplied to the water heater based on the first current value and the second current value is equal to or greater than the predetermined value, the target frequency of the inverter may be adjusted to be reduced.

Embodiments of the present invention may provide one or more effects. First, it may be possible to provide an electric resistance heater and a heat pump system-based heater together and control the heaters, thereby improving energy efficiency for heating water to a set temperature in a water heater. Second, it may be possible to efficiently operate a water heater by setting a plurality of operation modes of the water heater for various uses and adjusting a frequency of an inverter based on each of the operation modes.

To solve the above issues, an aspect provides a water heater according to claim 1, and a control method thereof according to claim 12. Technical goals to be achieved through the example embodiments are not limited to the technical goals as described above, and other technical tasks can be inferred from the following example embodiments.

It will be understood that each block of flowcharts and/or block diagrams, and combinations of blocks in flowcharts and/or block diagrams, can be implemented by computer program instructions. These computer program instructions may be provided to a processor of a general-purpose computer, special purpose computer, or other programmable data processing apparatus, such that the instructions which are executed via the processor of the computer or other programmable data processing apparatus create means for implementing the functions/acts specified in the flowcharts and/or block diagrams. These computer program instructions may also be stored in a non-transitory computer-readable memory that can direct a computer or other programmable data processing apparatus to function in a particular manner, such that the instructions stored in the non-transitory computer-readable memory produce articles of manufacture embedding instruction means which implement the function/act specified in the flowcharts and/or block diagrams. The computer program instructions may also be loaded onto a computer or other programmable data processing apparatus to cause a series of operational steps to be performed on the computer or other programmable apparatus to produce a computer implemented process such that the instructions which are executed on the computer or other programmable apparatus provide steps for implementing the functions/acts specified in the flowcharts and/or block diagrams.

Furthermore, the respective block diagrams may illustrate parts of modules, segments, or codes including at least one or more executable instructions for performing specific logic function(s). Moreover, it should be noted that the functions of the blocks may be performed in a different order in several modifications. For example, two successive blocks may be performed substantially at the same time, or may be performed in reverse order according to their functions. According to various embodiments of the present disclosure, the term "module", means, but is not limited to, a software or hardware component, such as a Field Programmable Gate Array (FPGA) or Application Specific Integrated Circuit (ASIC), which performs certain tasks. A module may advantageously be configured to reside on the addressable storage medium and be configured to be executed on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules. In addition, the components and modules may be implemented such that they execute one or more CPUs in a device or a secure multimedia card. In addition, a controller mentioned in the embodiments may include at least one processor that is operated to control a corresponding apparatus.

It will be understood that when an element or layer is referred to as being "on" another element or layer, the element or layer can be directly on another element or layer or intervening elements or layers. In contrast, when an element is referred to as being "directly on" another element or layer, there are no intervening elements or layers present. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section could be termed a second element, component, region, layer or section without departing from the teachings of the present invention.

Spatially relative terms, such as "lower", "upper" and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "lower" relative to other elements or features would then be oriented "upper" relative to the other elements or features. Thus, the exemplary term "lower" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Although embodiments have been described with reference to a number of illustrative embodiments thereof, it should be understood that numerous other modifications and embodiments can be devised by those skilled in the art that will fall within the scope of the invention thas is defined in the appended claims.

**Claims**

1. A water heater (100; 300), comprising:

   a storage tank (360) configured to store water;
   at least one sensor (370) configured to sense a temperature of the water and/or to sense a temperature outside of the water heater (100; 300);
   a first heater assembly (103, 105) comprising a heating element configured to heat the water;
   a second heater assembly (101) comprising a heat pump system (101) configured to heat the water;
   an inverter (350) connected to the heat pump system (101); and
   a first controller (310) configured to control the first heater assembly (103, 105);
   a second controller (320) configured to control the heat pump system (101) by adjusting an output frequency of the inverter (350), wherein the second controller (320) is configured to:

      determine a target pressure (Pb) of the heat pump system (101) based on the sensed temperature outside of the water heater (100; 300), the sensed temperature of the water in the storage tank (360), and a set temperature;
      determine a frequency change (ΔHz) based on a difference between the target pressure (Pb) and a pressure measured (Pa) in the heat pump system (101);
      determine a target frequency of the inverter (350) by reflecting the frequency change (ΔHz); and
      control the inverter (350) by adjusting the output frequency based on the target frequency.

2. The water heater (100; 300) of claim 1, being configured to be set and/or operated based on at least one of a heat pump mode (410), a heater mode (420), an auto mode (430), a turbo mode (440), and a vacation mode (450), and the second controller (320) is configured to adjust the output frequency of the inverter (350) based on the at least one of the heat pump mode (410), the heater mode (420), the auto mode (430), the turbo mode (440), and the vacation mode (450).

3. The water heater (100; 300) of any one of the preceding claims, wherein the water heater (100; 300) includes inlet pipe (107) for supplying water to the storage tank (360) and an outlet pipe (109) for discharging the water heated up to the set temperature.

4. The water heater (100; 300) of claims 2 or 3, wherein:

the heat pump mode (410) corresponds to a mode for heating the water in the storage tank (360) by using the second heater assembly (101),
the heater mode (420) corresponds to a mode for heating the water in the storage tank (360) by using the first heater assembly (103, 105),
the auto mode (430) corresponds to a mode for heating the water in the storage tank (360) by using at least one of the first heater assembly (103, 105) and the second heater assembly (101),
the turbo mode (440) corresponds to a mode for heating the water in the storage tank (360) by using both the first heater assembly (103, 105) and the second heater assembly (101),
and the vacation mode (450) corresponds to a mode for maintaining a temperature of the water in the storage tank (360) at a predetermined temperature.

5. The water heater (100; 300) of any one of the preceding claims, wherein the second controller (320) is configured to adjust the output frequency of the inverter (350) based on an allowable output frequency set based on the at least one of the heat pump mode (410), the heater mode (420), the auto mode (430), the turbo mode (440), and the vacation mode (450).

6. The water heater (100; 300) of any one of the preceding claims, wherein the second controller (320) is configured to:

identify information associated with an operation of the first heater assembly (103, 105) based on information received from the first controller (310), and
change the output frequency of the inverter (350) based on the information associated with the operation of the first heater assembly (103, 105).

7. The water heater (100; 300) of any one of the preceding claims, wherein the second controller (320) is configured to, when a current supplied to the water heater (100; 300) during an operation of the first heater assembly (103, 105) is equal to or greater than a predetermined value, adjust the output frequency of the inverter (350) to be reduced.

8. The water heater (100; 300) of any one of the preceding claims, wherein the second controller (320) is configured to adjust the output frequency of the inverter (350) based on a first current value supplied to the first heater assembly (103, 105) and/or a second current value input to the inverter (350).

9. A method for controlling a water heater (100; 300) according to claim 1, the method comprising:

determining (810) an operating mode of the water heater (100; 300);
determining (810) a set temperature of the water heater (100; 300);
sensing (820) a temperature outside of the water heater (100; 300);
sensing (820) a temperature of water in the water heater (100; 300); and
controlling a heat pump system (101) by adjusting an output frequency of an inverter (350) based on at least one of:

the mode of the water heater (100; 300),
the set temperature,
the sensed temperature outside of the water heater (100; 300), or
the sensed temperature of the water in the water heater (100; 300);
wherein the controlling of the heat pump system (101) comprises:

determining (510) a target pressure (Pb) of the heat pump system (101) based on the sensed temperature outside of the water heater (100; 300), the sensed temperature of the water in the storage tank (360), and the set temperature;
determining (520) a frequency change ($\Delta$Hz) based on a difference between the target pressure (Pb) and a pressure measured (Pa) in the heat pump system (101);
determining a target frequency of the inverter (350) by reflecting the frequency change ($\Delta$Hz); and

controlling the inverter (350) by adjusting the output frequency based on the target frequency.

10. The method of claim 9, wherein the controlling of the heat pump system (101) includes controlling the heat pump system (101) by adjusting the output frequency of the inverter (350) based on an allowable output frequency set to correspond to the determined mode of the water heater (100; 300).

11. The method of claim 9 or 10, wherein the controlling of the heat pump system (101) includes:

determining whether a heater (103, 105) included in the water heater (100; 300) operates;
reducing the output frequency of the inverter (350) when a current equal to or higher than a predetermined current is sensed in the water heater (100; 300) during operation of the heater (103, 105).

**Patentansprüche**

1. Warmwasserbereiter (100; 300), der Folgendes umfasst:

einen Speicherbehälter (360), der konfiguriert ist, Wasser zu speichern;
mindestens einen Sensor (370), der konfiguriert ist, eine Temperatur des Wassers zu erfassen und/oder eine Temperatur außerhalb des Warmwasserbereiters (100; 300) zu erfassen;
eine erste Heizanordnung (103, 105), die ein Heizelement umfasst, das konfiguriert ist, das Wasser zu erwärmen;
eine zweite Heizanordnung (101), die ein Wärmepumpensystem (101) umfasst, das konfiguriert ist, das Wasser zu erwärmen;
einen Wechselrichter (350), der mit dem Wärmepumpensystem (101) verbunden ist; und
eine erste Steuereinheit (310), die konfiguriert ist, die erste Heizanordnung (103; 105) zu steuern;
eine zweite Steuereinheit (320), die konfiguriert ist, das Wärmepumpensystem (101) durch Einstellen einer Ausgangsfrequenz des Wechselrichters (350) zu steuern, wobei die zweite Steuereinheit (320) konfiguriert ist zum:

Bestimmen eines Solldrucks (Pb) des Wärmepumpensystems (101) auf der Grundlage der erfassten Temperatur außerhalb des Warmwasserbereiters (100; 300), der erfassten Temperatur des Wassers im Speicherbehälter (360) und einer eingestellten Temperatur;
Bestimmen einer Frequenzänderung ($\Delta$Hz) auf der Grundlage einer Differenz zwischen dem Solldruck (Pb) und einem Druck (Pa), der im Wärmepumpensystem (101) gemessen wird;
Bestimmen einer Sollfrequenz des Wechselrichters (350) durch Reflektieren der Frequenzänderung ($\Delta$Hz); und
Steuern des Wechselrichters (350) durch Einstellen der Ausgangsfrequenz auf der Grundlage der Sollfrequenz.

2. Warmwasserbereiter (100; 300) nach Anspruch 1, der konfiguriert ist, auf der Grundlage einer Wärmepumpenbetriebsart (410) und/oder einer Heizeinrichtungsbetriebsart (420) und/oder einer Auto-Betriebsart (430) und/oder einer Turbo-Betriebsart (440) und/oder einer Ferienbetriebsart (450) eingestellt und/oder betrieben zu werden, und wobei die zweite Steuereinheit (320) konfiguriert ist, die Ausgangsfrequenz des Wechselrichters (350) auf der Grundlage der Wärmepumpenbetriebsart (410) und/oder der Heizeinrichtungsbetriebsart (420) und/oder der Auto-Betriebsart (430) und/oder der Turbo-Betriebsart (440) und/oder der Ferienbetriebsart (450) einzustellen.

3. Warmwasserbereiter (100; 300) nach einem der vorhergehenden Ansprüche, wobei der Warmwasserbereiter (100; 300) eine Einlassrohrleitung (107) zum Zuführen von Wasser zu Speicherbehälter (360) und eine Auslassrohrleitung (109) zum Auslassen des Wassers, das auf die eingestellte Temperatur aufgeheizt worden ist, enthält.

4. Warmwasserbereiter (100; 300) nach den Ansprüchen 2 oder 3, wobei:

die Wärmepumpenbetriebsart (410) einer Betriebsart zum Erwärmen des Wassers im Speicherbehälter (360) unter Verwendung der zweiten Heizanordnung (101) entspricht,
die Heizeinrichtungsbetriebsart (420) einer Betriebsart zum Erwärmen des Wassers im Speicherbehälter (360) unter Verwendung der ersten Heizanordnung (103, 105) entspricht,
die Auto-Betriebsart (430) einer Betriebsart zum Erwärmen des Wassers im Speicherbehälter (360) unter Verwendung der ersten Heizanordnung (103, 105) und/oder der zweiten Heizanordnung (101) entspricht,

die Turbo-Betriebsart (440) einer Betriebsart zum Erwärmen des Wassers im Speicherbehälter (360) unter Verwendung sowohl der ersten Heizanordnung (103, 105) als auch der zweiten Heizanordnung (101) entspricht, und die Ferienbetriebsart (450) einer Betriebsart zum Aufrechterhalten einer Temperatur des Wassers im Speicherbehälter (360) auf einer vorgegebenen Temperatur entspricht.

5. Warmwasserbereiter (100; 300) nach einem der vorhergehenden Ansprüche, wobei die zweite Steuereinheit (320) konfiguriert ist, die Ausgangsfrequenz des Wechselrichters (350) auf der Grundlage einer zulässigen Ausgangsfrequenz einzustellen, die auf der Grundlage der Wärmepumpenbetriebsart (410) und/oder der Heizeinrichtungsbetriebsart (420) und/oder der Auto-Betriebsart (430) und/oder der Turbo-Betriebsart (440) und/oder der Ferienbetriebsart (450) eingestellt wird.

6. Warmwasserbereiter (100; 300) nach einem der vorhergehenden Ansprüche, wobei die zweite Steuereinheit (320) konfiguriert ist zum:

    Identifizieren von Informationen, die einem Betrieb der ersten Heizanordnung (103, 105) zugeordnet sind, auf der Grundlage von Informationen, die von der ersten Steuereinheit (310) empfangen werden, und
    Ändern der Ausgangsfrequenz des Wechselrichters (350) auf der Grundlage der Informationen, die dem Betrieb der ersten Heizanordnung (103, 105) zugeordnet sind.

7. Warmwasserbereiter (100; 300) nach einem der vorhergehenden Ansprüche, wobei die zweite Steuereinheit (320) konfiguriert ist, dann, wenn ein Strom, der dem Warmwasserbereiter (100; 300) während eines Betriebs der ersten Heizanordnung (103, 105) zugeführt wird, größer oder gleich einem vorgegebenen Wert ist, die Ausgangsfrequenz des Wechselrichters (350) derart einzustellen, dass sie verringert wird.

8. Warmwasserbereiter (100; 300) nach einem der vorhergehenden Ansprüche, wobei die zweite Steuereinheit (320) konfiguriert ist, die Ausgangsfrequenz des Wechselrichters (350) auf der Grundlage eines ersten Stromwerts, der der ersten Heizanordnung (103, 105) zugeführt wird, und/oder eines zweiten Stromwerts, der in den Wechselrichter (350) eingegeben wird, einzustellen.

9. Verfahren zum Steuern eines Warmwasserbereiters (100; 300) nach Anspruch 1, wobei das Verfahren Folgendes umfasst:

    Bestimmen (810) einer Betriebsart des Warmwasserbereiters (100; 300);
    Bestimmen (810) einer eingestellten Temperatur des Warmwasserbereiters (100; 300);
    Erfassen (820) einer Temperatur außerhalb des Warmwasserbereiters (100; 300);
    Erfassen (820) einer Temperatur des Wassers im Warmwasserbereiter (100; 300); und
    Steuern eines Wärmepumpensystems (101) durch Einstellen einer Ausgangsfrequenz eines Wechselrichters (350) auf der Grundlage von:

        der Betriebsart des Warmwasserbereiters (100; 300), und/oder
        der eingestellten Temperatur, und/oder
        der erfassten Temperatur außerhalb des Warmwasserbereiters (100; 300), oder
        der erfassten Temperatur des Wassers im Warmwasserbereiter (100; 300);
        wobei das Steuern des Wärmepumpensystem (101) Folgendes umfasst:

            Bestimmen (510) eines Solldrucks (Pb) des Wärmepumpensystems (101) auf der Grundlage der erfassten Temperatur außerhalb des Warmwasserbereiters (100; 300), der erfassten Temperatur des Wassers im Speicherbehälter (360) und der eingestellten Temperatur;
            Bestimmen (520) einer Frequenzänderung ($\Delta$Hz) auf der Grundlage einer Differenz zwischen dem Solldruck (Pb) und einem Druck (Pa), der im Wärmepumpensystem (101) gemessen wird;
            Bestimmen einer Sollfrequenz des Wechselrichters (350) durch Reflektieren der Frequenzänderung ($\Delta$Hz); und
            Steuern des Wechselrichters (350) durch Einstellen der Ausgangsfrequenz auf der Grundlage der Sollfrequenz.

10. Verfahren nach Anspruch 9, wobei das Steuern des Wärmepumpensystems (101) das Steuern des Wärmepumpensystems (101) durch Einstellen der Ausgangsfrequenz des Wechselrichters (350) auf der Grundlage einer zulässigen Ausgangsfrequenz, die derart eingestellt wird, dass sie der bestimmten Betriebsart des Warmwasserebereiters (100; 300) entspricht, enthält.

**11.** Verfahren nach Anspruch 9 oder 10, wobei das Steuern des Wärmepumpensystems (101) Folgendes enthält:

Bestimmen, ob eine Heizeinrichtung (103, 105), die im Warmwasserbereiter (100; 300) enthalten ist, arbeitet; Verringern der Ausgangsfrequenz des Wechselrichters (350), wenn ein Strom größer oder gleich einem vorgegebenen Strom während des Betriebs der Heizeinrichtung (103, 105) im Warmwasserbereiter (100; 300) erfasst wird.

## Revendications

**1.** Chauffe-eau (100 ; 300), comprenant :

une cuve de stockage (360) configurée pour stocker de l'eau ;
au moins un capteur (370) configuré pour détecter une température de l'eau et/ou pour détecter une température à l'extérieur du chauffe-eau (100 ; 300) ;
un premier groupe de chauffe (103, 105) comprenant un élément chauffant configuré pour chauffer l'eau ;
un second groupe de chauffe (101) comprenant un système de pompe à chaleur (101) configuré pour chauffer l'eau ;
un inverseur (350) connecté au système de pompe à chaleur (101) ; et
un premier module de commande (310) configuré pour commander le premier groupe de chauffe (103, 105) ;
un second module de commande (320) configuré pour commander le système de pompe à chaleur (101) en ajustant une fréquence de sortie de l'inverseur (350), le second module de commande (320) étant configuré pour :

déterminer une pression cible (Pb) du système de pompe à chaleur (101) sur la base de la température détectée à l'extérieur du chauffe-eau (100 ; 300), de la température détectée de l'eau dans la cuve de stockage (360), et d'une température fixée ;
déterminer une modification de fréquence (ΔHz) sur la base d'une différence entre la pression cible (Pb) et une pression mesurée (Pa) dans le système de pompe à chaleur (101) ;
déterminer une fréquence cible de l'inverseur (350) en traduisant la modification de fréquence (ΔHz) ; et
commander l'inverseur (350) en ajustant la fréquence de sortie sur la base de la fréquence cible.

**2.** Chauffe-eau (100 ; 300) selon la revendication 1, qui est configuré pour être réglé et/ou mis en fonctionnement sur la base d'au moins un parmi un mode pompe à chaleur (410), un mode dispositif chauffant (420), un mode auto (430), un mode turbo (440), et un mode vacances (450), et
le second module de commande (320) est configuré pour ajuster la fréquence de sortie de l'inverseur (350) sur la base dudit au moins un parmi le mode pompe à chaleur (410), le mode dispositif chauffant (420), le mode auto (430), le mode turbo (440), et le mode vacances (450).

**3.** Chauffe-eau (100 ; 300) selon l'une quelconque des revendications précédentes, dans lequel le chauffe-eau (100 ; 300) inclut un conduit d'entrée (107) pour alimenter en eau la cuve de stockage (360) et un conduit de sortie (109) pour décharger l'eau chauffée jusqu'à la température fixée.

**4.** Chauffe-eau (100 ; 300) selon la revendication 2 ou 3, dans lequel :

le mode pompe à chaleur (410) correspond à un mode pour chauffer l'eau dans la cuve de stockage (360) en utilisant le second groupe de chauffe (101),
le mode dispositif chauffant (420) correspond à un mode pour chauffer l'eau dans la cuve de stockage (360) en utilisant le premier groupe de chauffe (103, 105),
le mode auto (430) correspond à un mode pour chauffer l'eau dans la cuve de stockage (360) en utilisant au moins l'un du premier groupe de chauffe (103, 105) et du second groupe de chauffe (101),
le mode turbo (440) correspond à un mode pour chauffer l'eau dans la cuve de stockage (360) en utilisant à la fois le premier groupe de chauffe (103, 105) et le second groupe de chauffe (101),
et le mode vacances (450) correspond à un mode pour maintenir une température de l'eau dans la cuve de stockage (360) à une température préétablie.

**5.** Chauffe-eau (100 ; 300) selon l'une quelconque des revendications précédentes, dans lequel le second module de commande (320) est configuré pour ajuster la fréquence de sortie de l'inverseur (350) sur la base d'une fréquence permissible de sortie réglée sur la base dudit au moins un parmi le mode pompe à chaleur (410), le mode dispositif chauffant (420), le mode auto (430), le mode turbo (440), et le mode vacances (450).

6. Chauffe-eau (100 ; 300) selon l'une quelconque des revendications précédentes, dans lequel le second module de commande (320) est configuré pour :

identifier des informations associées à un fonctionnement du premier groupe de chauffe (103, 105) sur la base d'informations reçues du premier module de commande (310), et
modifier la fréquence de sortie de l'inverseur (350) sur la base des informations associées au fonctionnement du premier groupe de chauffe (103, 105).

7. Chauffe-eau (100 ; 300) selon l'une quelconque des revendications précédentes, dans lequel le second module de commande (320) est configuré pour, lorsqu'un courant fourni au chauffe-eau (100 ; 300) pendant un fonctionnement du premier groupe de chauffe (103, 105) est égal ou supérieur à une valeur préétablie, ajuster la fréquence de sortie de l'inverseur (350) pour être réduite.

8. Chauffe-eau (100 ; 300) selon l'une quelconque des revendications précédentes, dans lequel le second module de commande (320) est configuré pour ajuster la fréquence de sortie de l'inverseur (350) sur la base d'une première valeur de courant fournie au premier groupe de chauffe (103, 105) et/ou d'une seconde valeur de courant entrée dans l'inverseur (350).

9. Procédé pour commander un chauffe-eau (100 ; 300) selon la revendication 1, le procédé comprenant les étapes consistant à :

déterminer (810) un mode de fonctionnement du chauffe-eau (100 ; 300) ;
déterminer (810) une température fixée du chauffe-eau (100 ; 300) ;
détecter (820) une température à l'extérieur du chauffe-eau (100 ; 300) ;
détecter (820) une température de l'eau dans le chauffe-eau (100 ; 300) ; et
commander un système de pompe à chaleur (101) en ajustant une fréquence de sortie d'un inverseur (350) sur la base d'au moins un(e) parmi :

le mode du chauffe-eau (100 ; 300),
la température fixée,
la température détectée à l'extérieur du chauffe-eau (100 ; 300), ou
la température détectée de l'eau dans le chauffe-eau (100 ; 300) ;
dans lequel le fait de commander le système de pompe à chaleur (101) comprend :

déterminer (510) une pression cible (Pb) du système de pompe à chaleur (101) sur la base de la température détectée à l'extérieur du chauffe-eau (100 ; 300), de la température détectée de l'eau dans la cuve de stockage (360), et de la température fixée ;
déterminer (520) une modification de fréquence ($\Delta$Hz) sur la base d'une différence entre la pression cible (Pb) et une pression mesurée (Pa) dans le système de pompe à chaleur (101) ;
déterminer une fréquence cible de l'inverseur (350) en traduisant la modification de fréquence ($\Delta$Hz) ; et
commander l'inverseur (350) en ajustant la fréquence de sortie sur la base de la fréquence cible.

10. Procédé selon la revendication 9, dans lequel le fait de commander le système de pompe à chaleur (101) inclut commander le système de pompe à chaleur (101) en ajustant la fréquence de sortie de l'inverseur (350) sur la base d'une fréquence permissible de sortie réglée pour correspondre au mode déterminé du chauffe-eau (100 ; 300).

11. Procédé selon la revendication 9 ou 10, dans lequel le fait de commander le système de pompe à chaleur (101) inclut :

déterminer si un dispositif chauffant (103, 105) inclus dans le chauffe-eau (100 ; 300) est en fonction ;
réduire la fréquence de sortie de l'inverseur (350) lorsqu'un courant égal ou supérieur à un courant préétabli est détecté dans le chauffe-eau (100 ; 300) pendant le fonctionnement du dispositif chauffant (103, 105).

# FIG. 1

# FIG. 2

# FIG. 3

# FIG. 4

Display (400)

| | |
|---|---|
| Heat pump mode | 410 |
| Heater mode | 420 |
| Auto mode | 430 |
| Turbo mode | 440 |
| Vacation mode | 450 |

# FIG. 5

```
┌─────────────────┐
│      Start      │
└─────────────────┘
         │
         ▼
┌──────────────────────────────────────────────────────┐
│              Identify target pressure                 │────  510
└──────────────────────────────────────────────────────┘
         │
         ▼
┌──────────────────────────────────────────────────────┐
│ Identify difference between target pressure and       │────  520
│ measured pressure                                     │
└──────────────────────────────────────────────────────┘
         │
         ▼
┌──────────────────────────────────────────────────────┐
│ Identify frequency change amount based on pressure    │────  530
│ difference                                            │
└──────────────────────────────────────────────────────┘
         │
         ▼
┌──────────────────────────────────────────────────────┐
│ Identify target frequency based on frequency change   │────  540
│ amount                                                │
└──────────────────────────────────────────────────────┘
         │
         ▼
┌─────────────────┐
│       End       │
└─────────────────┘
```

# FIG. 6

```
┌─────────────────────┐
│   Identify mode     │── 601
└─────────────────────┘
          │
          ▼
      ◇ Auto mode? ◇ ── 603 ──No──┐
          │                        ▼
         Yes                  ◇ Vacation mode? ◇ ── 607 ──No──┐
          │                        │                           │
          ▼                       Yes                          ▼
┌─────────────────────┐    ┌─────────────────────┐   ┌─────────────────────┐
│ Identify allowable  │    │ Identify allowable  │   │ Identify allowable  │
│ frequency           │605 │ frequency           │609│ frequencies         │611
│ corresponding to    │    │ corresponding to    │   │ corresponding to    │
│ auto mode           │    │ vacation mode       │   │ other modes         │
└─────────────────────┘    └─────────────────────┘   └─────────────────────┘
          │                        │                           │
          ◄────────────────────────┴───────────────────────────┘
          ▼
┌─────────────────────────────┐
│ Determine allowable frequency│── 613
└─────────────────────────────┘
```

EP 3 845 824 B1

# FIG. 7

Identify information associated
with operation of heater — 701

On state? — 703

No

Yes — 705 — 707

Reduce limit level for
input current of inverter

Maintain limit level for
input current of inverter

Determine limit level — 709

# FIG. 8

Start

Identify set temperature and mode of water heater ~ 810

Sense temperature related to outside of water heater and temperature of water stored in water heater ~ 820

Control heat pump system by adjusting frequency of inverter based on at least one of mode, set temperature, temperature related to outside of water heater, and temperature of water ~ 830

End

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190178087
- WO 2014002133 A1
- WO 2019215639 A2